(19) Europäisches Patentamt
European Patent Office
Office européen des brevets

(11) **EP 3 859 609 A1**

(12) **EUROPEAN PATENT APPLICATION**

(43) Date of publication:
**04.08.2021 Bulletin 2021/31**

(51) Int Cl.:
**G06N 3/04** *(2006.01)*    **H04B 7/0413** *(2017.01)*

(21) Application number: **20154407.9**

(22) Date of filing: **29.01.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Friedrich-Alexander-Universität
Erlangen-Nürnberg
91054 Erlangen (DE)**

(72) Inventors:
• **Müller, Ralf R.**
  **91054 Erlangen (DE)**
• **Gäde, Bernhard**
  **90419 Nürnberg (DE)**
• **Bereyhi, Ali**
  **91058 Erlangen (DE)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **FINITE RESOLUTION DECOMPOSITION OF A MATRIX FOR LOW-COMPLEXITY AND ENERGY-EFFICIENT MATRIX-VECTOR MULTIPLICATION**

(57)    A method for providing transmit symbols to be transmitted by a transmitter to one or more receivers of a wireless MIMO communication system is described. The method includes receiving data to be transmitted to the one or more receivers, and obtaining the transmit symbols to be transmitted by multiplying a data vector including the data to be transmitted by a matrix, like a precoding matrix. The matrix is approximated by a plurality of matrices whose elements are positive or negative integer powers of two so that multiplying the data vector by the matrix includes a series of sub-multiplications, each of the sub-multiplications being realized only by bit shifts and additions.

Fig. 2

EP 3 859 609 A1

**Description**

The present invention concerns the field of signal processing systems processing data vectors by multiplying the data vector with a matrix to obtain output data. Embodiments relate to a wireless communication system, e.g., a Multiple-Input-Multiple-Output, MIMO, mobile communication network, signal detection, machine learning and an artificial neural network. Embodiments of the present invention relate to a low-complexity and energy-efficient matrix-vector multiplication technique for precoding a data for obtaining output data, like transmit symbols in a MIMO communication system, using a matrix, like a precoding matrix.

Many applications of digital signal processing rely on matrix-vector multiplications with a fixed word size. Examples of such applications include MIMO precoding in a wireless communication system, signal detection, and machine learning using, e.g., an artificial neural network. As the dimensions grow large, which is often the case in such applications, the matrix-vector multiplication operation becomes burdensome in terms of complexity and energy consumption.

Conventionally, this problem is addressed in different ways, e.g. by reducing the bit resolution or word length of the digital representation of the matrix elements and the vector elements. While this allows for less complex and more efficient arithmetic units, the resulting quantization error may become prohibitive. For example, in mmWave applications each reduction in the bit resolution may decrease the accuracy as each bit, by which the bit resolution is reduced, deteriorates the signal-to-noise ratio, SNR, by 6dB. In the field of digital filters, a common method to avoid multiplications is to represent coefficients as a sum-of-powers-of-two, SOPOT. This makes it possible to calculate multiplications solely in terms of bit shifts and additions. Other conventional approaches for accelerating the matrix-vector multiplications in a processing system, like a computer system, use optimized algorithms, such as the Strassen algorithm or the method of Four Russians. However, the reduction in complexity remains limited. Furthermore, the Strassen algorithm only reduces the number of required multiplications without allowing for hardware that is more efficient. The method of Four Russians is limited to matrices, the entries of which are elements of a finite field. Yet another conventional approach is to use dedicated integrated circuits specifically developed to carry out a matrix-vector multiplication in the analog domain. However, this increases the costs and the hardware elements needed as, in addition to conventional digital signal processor, an additional dedicated processor is needed. Examples for accelerating matrix-vector multiplications are described by:

- Levant Aksoy, et. Al., "A Novel Method for the Approximation of Multiplierless Constant Matrix Vector Multiplication", 2015 IEEE 13th International Conference on Embedded and Ubiquitous Computing, pages 98-105.
- Nicolas Boullis, et. al., "Some Optimizations of Hardware Multiplication by Constant Matrices", IEEE Transactions on Computers, VOL. 54, NO. 10, October 2005, pages 1271-1282.
- Roman Genov, et. al., "Charge-Mode Parallel Architecture for Vector-Matrix Multiplication", IEEE Transactions on Circuits and Systems-II: Analog and Digital Signal Processing, VOL. 48, NO.10, October 2001, pages 930-936.
- Sanjeev Arora, et. al., "Provable Bounds for Learning Some Deep Representations", Proceedings of the 31st International Conference on Machine Learning, Beijing, China, 2014. JMLR: W&CP volume 32.
- 1Sanjeev Arora, et. al., "More algorithms for provable dictionary learning", arXiv:1401.0579 [cs.DS], January 3, 2014.
- Behnam Neyshabur, et. al., "Sparse Matrix Factorization", arXiv:1311.3315 [cs.LG], May 13, 2014.
- Horng, B-R., Henry Samueli, and A. N. Wilson. "The design of two-channel lattice-structure perfect-reconstruction filter banks using powers-of-two coefficients." IEEE Transactions on Circuits and Systems I: Fundamental Theory and Applications 40.7 (1993): 497-499.

It is an objective of the present invention to provide a low-complexity and energy-efficient matrix-vector multiplication technique for processing data with an improved accuracy data for obtaining output data using a matrix.

This objective is achieved by the subject matter as defined in the independent claims. Embodiments are defined in the dependent claims.

Embodiments of the present invention are now described in further detail with reference to the accompanying drawings, in which:

Fig. 1    is a schematic representation of a wireless network or a wireless network infrastructure of a wireless communication system;

Fig. 2    is a block diagram of a MIMO communication system implementing the present invention in accordance with an embodiment;

Fig. 3    is a block diagram schematically representing an artificial neural network implementing the present invention in accordance with another embodiment; and

Fig. 4    illustrates an example of a computer system on which units or modules as well as the steps of the methods described in accordance with the inventive approach may execute.

In the following, preferred embodiments of the present invention are described in further detail with reference to the enclosed drawings in which elements having the same or similar function are referenced by the same reference signs.

As described above, existing approaches for matrix-vector multiplications are implemented either at the expense of a reduced accuracy or by using dedicated algorithms or hardware having the above-described disadvantages. While SOPOT representations may be known in the field of digital filters, such representations have not been disclosed so far for a dedicated matrix-vector multiplication for quantized matrices. It has been found by the inventors of the present invention that such representations may form the basis for an efficient matrix-vector multiplication for quantized matrices, and the inventive approach extends SOPOT representations. More specifically, in accordance with embodiments, an efficient matrix-vector multiplication algorithm is disclosed which is based on an improved quantization method of the matrix in accordance with which the matrix is approximated by a sum or product of matrices whose elements are positive and/or negative integer powers of two. This allows calculating the matrix-vector multiplication by a series of sub-multiplications, each of which requires only bit shifts and additions/subtractions (in the following a subtraction is considered an addition with a negative summand).

Embodiments of the inventive approach are advantageous as the memory required to store the factorized matrix may be smaller than in the standard approach, where each matrix element is quantized to a certain bit resolution. Thereby, with both the approach disclosed herein and the standard method the same quantization error may be achieved. In accordance with further embodiments, the complexity and memory requirements in the computing system may be further reduced by choosing at least one of the matrix factors to be sparse. The inventive approach performs superior to conventional approaches because the bit shifts may be implemented by simple, fast and efficient hardware. Further, already quite few matrix factors whose elements are powers of two with small exponents yield an excellent approximation of the original matrix, i.e., the number of required sub-multiplications may be kept small and the amount of memory required to store the exponents may be low. In accordance with embodiments, a trade-off between complexity and accuracy may be achieved by tuning the sparsity level of the matrix factors.

The present invention provides (see for example claim 1) a method for providing transmit symbols to be transmitted by a transmitter to one or more receivers of a wireless MIMO communication system, the method comprising:

receiving data to be transmitted to the one or more receivers, and
obtaining the transmit symbols to be transmitted by multiplying a data vector including the data to be transmitted by a matrix, like a precoding matrix,
wherein the matrix is approximated by a plurality of matrices whose elements are positive or negative integer powers of two so that multiplying the data vector by the matrix includes a series of sub-multiplications, each of the sub-multiplications being realized only by bit shifts and additions.

The present invention provides (see for example claim 2) a method for operating an artificial neural network, the method comprising:

receiving input values for some or all of the inputs of the artificial neural network; and
processing the input values according to a processing chain defined by the artificial neural network or a part of the artificial neural network, thereby obtaining output values,
wherein the processing comprises multiplying a data vector including the input values by a matrix so as to obtain the output values, and
wherein the matrix is approximated by a plurality of matrices whose elements are positive or negative integer powers of two so that multiplying the data vector by the matrix includes a series of sub-multiplications, each of the sub-multiplications being realized only by bit shifts and additions.

In accordance with embodiments (see for example claim 3), the matrix is approximated by determining the plurality of matrices at certain times or for certain intervals, e.g., when estimating a channel for transmitting the transmit symbols or for a coherence interval, or using matrices with which the transmitter or the artificial neural network is configured or preconfigured.

In accordance with embodiments (see for example claim 4), the plurality of matrices is obtained using a finite resolution decomposition of the matrix such that an amount of memory occupied by the plurality of matrices is substantially the same as an amount of memory occupied by the matrix.

In accordance with embodiments (see for example claim 5), the matrix is approximated by a product of the plurality of matrices whose elements are positive or negative integer powers of two, and the finite resolution decomposition includes a power-2-decomposition.

In accordance with embodiments (see for example claim 6), the power-2-decomposition is a product-decomposition, and the matrix is approximated as follows:

$$\widetilde{A} = \prod_{k=1}^{K} F_k$$

where

$\widetilde{A}$     represents the approximated matrix,
$F_k$     represents a matrix of the decomposition with entries being either zero or a positive or negative integer power of 2, $k \in \{1,2, \dots, K\}$.

In accordance with embodiments (see for example claim 7), the matrix is a *MxN* matrix, and the entries of $F_1, \dots F_K$ are of the form

$$[F_k]_{ij} = \pm 2^l \quad \text{for } l \in \{E_0\} \cup \mathbb{V}_k : \mathbb{V}_k \subset \mathbb{Z}.$$

In accordance with embodiments (see for example claim 8), the product-decomposition includes a nonlinearity associated with the respective factors, and the matrix *A* may be approximated as follows:

$$\widetilde{A} = \prod_{k=1}^{K} f_k(F_k)$$

where

$\widetilde{A}$     represents the approximated matrix,
$F_k$     represents a matrix of the decomposition with entries being either zero or a positive or negative integer power of 2, $k \in \{1,2, \dots, K\}$, and
$f_k(\cdot)$     represents a nonlinearity to which $F_k$ is subjected.

In accordance with embodiments (see for example claim 9), the power-2-decomposition is a sum-decomposition, and the precoding matrix is approximated as follows:

$$\widetilde{A} = \sum_{k=1}^{K} M_k$$

where

$\widetilde{A}$     represents the approximated *MxN* precoding matrix,
$M_k$     represents a matrix of the decomposition with entries being either zero or a positive or negative integer power of 2, $k \in \{1,2, \dots, K\}$.

In accordance with embodiments (see for example claim 10), the matrix is a *MxN* matrix, and the entries of $M_1, \dots M_K$ are of the form

$$[M_k]_{ij} = \pm 2^l \quad \text{for } l \in \{E_0\} \cup \mathbb{V}_k : \mathbb{V}_k \subset \mathbb{Z}.$$

In accordance with embodiments (see for example claim 11), the cardinality of $^C\mathbb{V}$ is chosen so that the matrices of the decomposition occupy a predefined amount of bits, e.g., the same total amount of bits or a certain fraction of the total amount of bits, like ½ or ¼, as the matrix to be approximated.

In accordance with embodiments (see for example claim 12), the decomposition is terminated as soon as a SNR falls below a predefined or maximum SNR requirement on the approximated matrix of the specific application, or the number of matrices of the decomposition depends on an additional SNR achievable by a further matrix, wherein the decomposition may be terminated once an additional SNR achievable by a further matrix reaches of falls below a certain or predefined threshold.

In accordance with embodiments (see for example claim 13), the matrix is approximated such that a distortion between the approximated matrix and the matrix is at or below a predefined threshold.

The present invention provides (see for example claim 14) a non-transitory computer program product comprising a computer readable medium storing instructions which, when executed on a computer, perform the method according to embodiments of the present invention.

The present invention provides (see for example claim 15) an apparatus for providing transmit symbols to be transmitted by a transmitter to one or more receivers of a wireless MIMO communication system, wherein

the apparatus is to receive data to be transmitted to the one or more receivers, and
the apparatus is to obtain the transmit symbols to be transmitted by multiplying a data vector including the data to be transmitted by a matrix, like a precoding matrix,
wherein the matrix is approximated by a product of a plurality of matrices whose elements are positive or negative integer powers of two so that multiplying the data vector by the matrix includes a series of sub-multiplications, each of the sub-multiplications being realized only by bit shifts and bit additions.

The present invention provides (see for example claim 16) an artificial neural network, comprising:

a plurality of inputs, some or all of the inputs to receive input values; and
a processor coupled to the inputs, the processor including a processing chain, the processing chain to process the input values, thereby obtaining output values,
wherein the processor is to multiply a data vector including the input values by a matrix so as to obtain the output values, and
wherein the matrix is approximated by a plurality of matrices whose elements are positive or negative integer powers of two so that multiplying the data vector by the matrix includes a series of sub-multiplications, each of the sub-multiplications being realized only by bit shifts and additions.

The present invention provides (see for example claim 17) a transmitter of a wireless MIMO communication system, comprising an apparatus according to embodiments of the present invention for providing transmit symbols to be transmitted to one or more receivers of the wireless MIMO communication system.

The present invention provides (see for example claim 18) a wireless MIMO communication system, comprising one or more receivers, and one or more transmitters according to embodiments of the present invention for transmitting data to the one or more receivers.

Embodiments of the inventive approach are now described in more detail with reference to a communication system, like a massive MIMO communication system, performing precoding of data to be transmitted by a precoding matrix so as to obtain transmit symbols to be transmitted.

Employing the inventive approach in a communication system, like a massive MIMO communication system, is advantageous as it allows maximizing the achievable data rate. Conventionally, the transmitter needs to determine the transmit symbols as the multiplication of the data vector by a large precoding matrix which imposes a large computational load on the system, especially at high data rates. This is avoided by applying the inventive approach summarized above allowing for the matrix-vector multiplication technique with high performance and low energy consumption, yet yielding a good SNR.

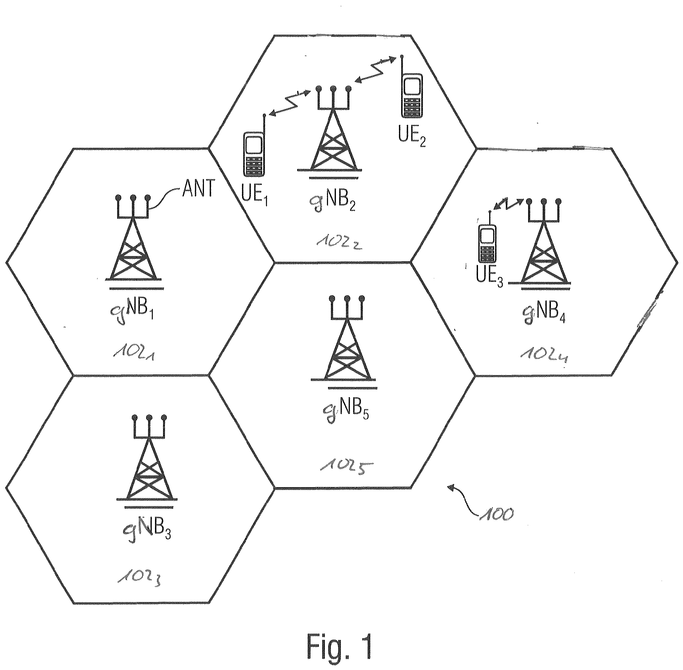

In accordance with embodiments of the present invention the wireless communication system may be implemented in as shown in Fig. 1. The wireless network 100 may include a plurality of base stations $gNB_1$ to $gNB_5$, each serving a specific area surrounding the base station schematically represented by the respective cells $102_1$ to $102_5$. The base stations are provided to serve users within a cell. A user may be a stationary device or a mobile device, like a user equipment, UE, an IoT device, a vehicle, a building and any other device providing for a network connectivity. Only five cells are shown, however, the wireless communication system may include more such cells. Two users, UE1 and UE2, are illustrated in cell $102_2$ and are served by base station $gNB_2$. Another user $UE_3$ is shown in cell $102_4$ which is served by base station $gNB_4$. The arrows $104_1$, $104_2$ and $104_3$ schematically represent uplink/downlink connections for transmitting data from a user $UE_1$, $UE_2$ and $UE_3$ to the base stations $gNB_2$, $gNB_4$ or for transmitting data from the base stations $gNB_2$, $gNB_4$ to the users $UE_1$, $UE_2$, $UE_3$. In a wireless communication system like to one depicted schematically in Fig. 1, multi-antenna techniques may be used, e.g., in accordance with LTE or 5G, to improve user data rates, link reliability, cell coverage and network capacity. To support multi-stream or multi-layer transmissions, linear precoding may be used in the physical layer of the communication system. Linear precoding is performed by a precoding matrix which maps layers of data to antenna ports. The precoding may be seen as a generalization of beamforming, which is a technique to spatially direct or focus data transmission towards an intended receiver.

Using the precoding matrix to map the data or data vector to the respective antennas or antenna ports, from a data signaling processing view, relies on a matrix-vector multiplication using a fixed word size. For example, for fully digital beamforming for mmWave applications the precoding, matrix multiplications need to be performed at a very high rate. However, such multiplications result in an increased complexity and energy consumption, like the power consumption of the circuitry employed for carrying out the matrix multiplications, and such complexity and energy consumption may not be acceptable.

The present invention provides, as mentioned above, approaches for a more efficient and less complex precoding of a data vector with a precoding matrix avoiding any decrease in accuracy. For example, the precoding matrix may be a $M \times N$ precoding matrix $\boldsymbol{A}$ having entries saved on a computing system using $B$ bits. The precoding matrix may be used to calculate a vector $\boldsymbol{y}_{M \times 1}$ as:

$$y = A\,x \tag{1}$$

where $\boldsymbol{x}_{N \times 1}$ is a vector having entries also saved with $B$ bits.

To determine $\boldsymbol{y}$ from $\boldsymbol{x}$ and the precoding matrix $\boldsymbol{A}$, the inner product of each row vector in $\boldsymbol{A}$ and $x$ is to be calculated, and each inner product requires $N$ multiplications and $N - 1$ additions. Thus,

$$O_{Mul} = MN \tag{2}$$

multiplications and

$$O_{Add} = M(N - 1) \tag{3}$$

additions on variables having $B$ bits of resolution are needed. For this computational process the following two metrics are defined:

- *Cost*: To formulate the cost or expenses for determining $\boldsymbol{y}$, a per-bit cost for each operation is defined, that is denoted by $C_{Mul}$ and $C_{Add}$ representing the cost or expenses for one multiplication per bit and one addition per bit, respectively. Assuming that these costs are fixed, the cost for each multiplication and addition are $C_{Mul}B$ and $C_{Add}B$, respectively. The values of $C_{Mul}$ and $C_{Add}$ account for the time, i.e., the number of required cycles, and the power consumed by a circuitry used to perform the operation in a computing system. Thus, the total cost for determine y is given by:

$$C = MNB(C_{Mul} + C_{Add}) - MBC_{Add} \tag{4}$$

- *Memory*: The total amount of memory needed in a computing system to cache the precoding matrix $\boldsymbol{A}$ is

$$\mathcal{M} = MNB \text{ bits} \tag{5}$$

Given the fixed amount of memory for caching, the inventive approach provides a digital scheme, which determines $\boldsymbol{y}$ from $\boldsymbol{x}$ and the precoding matrix $\boldsymbol{A}$ with a low complexity. Embodiments of the present invention employ a finite resolution decomposition of the precoding matrix $\boldsymbol{A}$ which may occupy the same amount of memory as the precoding matrix $\boldsymbol{A}$ while using low-cost operations for calculating $\boldsymbol{y}$.

A downlink, DL, transmission in a mobile multiple input multiple output, MIMO, communication system is now considered, i.e., a communication link carrying data traffic from a base station, gNB, to a mobile user equipment, UE. Considering a base station with $N_{\mathrm{Tx}}$ antenna ports and a UE with $N_{\mathrm{Rx}}$ antenna ports, the symbols $y \in \mathbb{C}^{N_{\mathrm{Rx}} \times 1}$, which are received at a particular instant of time in a DL transmission at the UE, may be written as

$$y = HPs + n$$

where $H \in \mathbb{C}^{N_{\text{Rx}} \times N_{\text{Tx}}}$ denotes the channel matrix, $P \in \mathbb{C}^{N_{\text{Tx}} \times N_{\text{S}}}$ represents the precoding matrix at the gNB, $n \in \mathbb{C}^{N_{\text{Rx}} \times 1}$ is the additive noise at the receiver, $s \in \mathbb{C}^{N_{\text{S}} \times 1}$ is the data vector transmitted by the gNB which has to be decoded by the UE, and $N_{\text{S}}$ denotes the number of data streams transmitted.

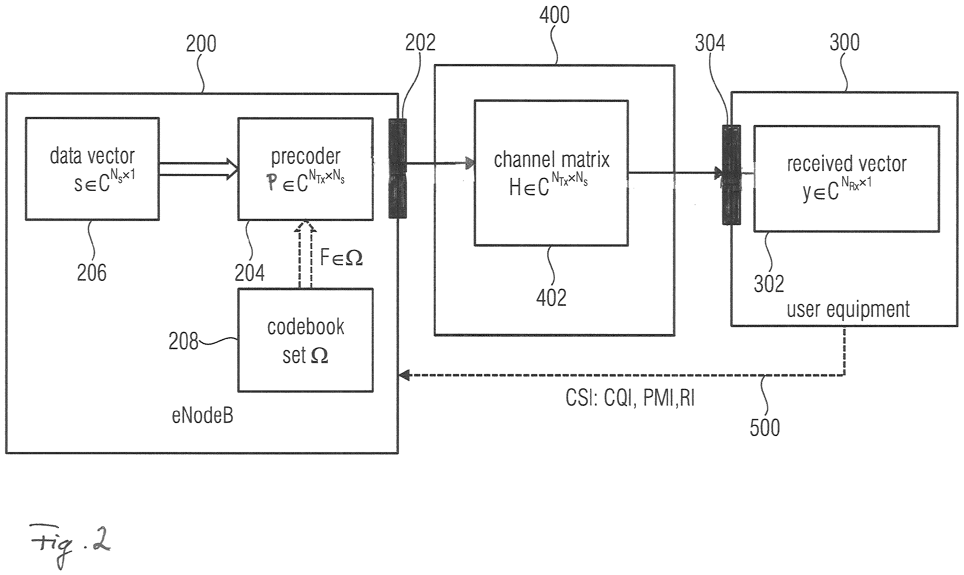

Fig. 2 is a block diagram of a MIMO DL transmission using codebook-based precoding. A base station, gNB, 200, a UE 300 and a channel 400, like a radio channel for a wireless data communication between the gNB 200 and the UE 300, is and schematically illustrated. The gNB 200 includes an antenna array 202 having a plurality of antennas or antenna elements, and a precoder 204 receiving a data vector 206 and a precoding matrix F from a codebook 208. The channel 400 may be described by the channel matrix 402. The UE 300 receives the data vector 302 via an antenna or an antenna array 304 having a plurality of antennas or antenna elements. Further, a feedback channel 500 between the UE 300 and the gNB 200 is shown for transmitting feedback information. The feedback may include a rank index, RI, a precoding matrix index PMI and a channel quality index, CQI, allowing, at the gNB 200, deciding the precoding matrix and the modulation order and coding scheme, MCS, of the symbols to be transmitted. The PMI and the RI may be used to determine the precoding matrix from a certain or predefined set of matrices $\Omega$ called codebook 208. The codebook 208, may be a look-up table with matrices in each entry of the table, and the PMI and RI from the UE decide which row and column of the table the optimal precoding matrix is obtained from. The precoding matrix is used at the gNB 200 to map the data or data vector $s \in \mathbb{C}^{N_{\text{S}} \times 1}$ to the $N_{\text{Tx}}$ antenna ports. Other implementations may not use a feedback and the precoding matrix is selected at the gNB.

In a system as depicted in Fig. 2, the transmitter, for example, the base station or the UE, when performing the precoding for the MIMO communication with the receiver, may employ the inventive approach to obtain the transmit symbols from the data vector for the transmission of the data. The transmitter may use a precoding matrix that may be selected from a codebook as explained above with reference to Fig. 2, either on the basis of a configuration or pre-configuration of the transmitter without feedback from the receiver, or responsive to a feedback from the receiver indicating the precoding matrix to be employed. Responsive to selecting the precoding matrix, the transmitter may employ the decomposition in accordance with embodiments of the present invention so as to allow for a low complex calculation of the transmit vectors. The transmitter may perform the decomposition in accordance with embodiments of the present invention dynamically so that, for example, for a certain time or interval a precoding matrix to be employed for the generation of the transmit symbols is decomposed, for example, the decomposition may be performed once per occurrence interval. In accordance with other embodiments, the transmitter may be configured or preconfigured either by higher layer signaling, like RRC signaling, or by a physical layer signaling, like DCI signaling, with decomposed matrices to be employed.

In accordance with the inventive approach, the cost reduction is achieved by representing a multiplication as a terminating expansion of the matrix into terms solely comprising values that are integer powers of two, such that the matrix-vector multiplication may be calculated by bit shifts and additions only.

In accordance with embodiments, a power-2-decomposition is employed, for example, a sum-decomposition or a product-decomposition.

*Sum-Decomposition*

In accordance with embodiments, the power-2-decomposition may include a sum-decomposition. When using the sum-decomposition, the precoding matrix $A$ may be approximated with $\tilde{A}$ which may be of the following form:

$$\tilde{A} = \sum_{k=1}^{K} M_k \qquad (6)$$

$M_k$, $k \in \{1, 2, \dots, K\}$, are $M \times N$ matrices, each entry of which is either zero or a positive or negative integer power of 2, meaning:

$$[M_k]_{ij} = \pm 2^l \quad \text{for } l \in \{E_0\} \cup \mathbb{V}_k ; \ \mathbb{V}_k \subset \mathbb{Z} \qquad (7)$$

with the notation $2^{E_0} = 0$, and the cardinalities of the sets $\mathbb{V}_k$ are specified in accordance with the available memory.

As an example, we assume that all $\mathbb{V}_k$ have the same cardinality $C_{\mathbb{V}}$.

Then, in order to make the matrix summands of the decomposition occupying the same total amount of memory as matrix **A**, the cardinality of $C_{\mathbb{V}}$ may be chosen as

$$C_{\mathbb{V}} = 2^{\frac{B}{K}-1} - 1 .$$

Based on the approximation of the precoding matrix **A** as indicated in (6), the transmit symbols to be used for the data transmission from the transmitter to the receiver of the MIMO communication system, may be approximated as follows:

$$\tilde{y} = \tilde{A}x \qquad (8a)$$

$$= \sum_{k=1}^{K} M_k\, x \qquad (8b)$$

A multiplication with $2^i$ is equivalent to a shift in memory by $i$ bits so that $M_k\,x$ may be calculated by $N$ shifts and $N$ - 1 additions so that the cost or expense for determining $\tilde{y}$ is as follows:

$$C_{sum} = KMNB\left(C_{Shf} + C_{Add}\right) - KMBC_{Add} \qquad (9)$$

where $C_{Shf}$ indicates the cost of the memory shifting per bit.

A memory shift is a simple computational operation in a computing system so that $C_{Shf} < C_{Mul}$ applies in most of the computing architectures. This means that the inventive approach employing the sum-decomposition reduces the total cost or expenses. This reduction is achieved at the expense of an error in the calculations, and the approximation $\tilde{y}$ is different up to some precision from **y**. The error may be characterized, using a distortion measure, as follows:

$$D = \left\|\tilde{A} - A\right\|_F \qquad (10)$$

where $\|\cdot\|_F$ denotes the Frobenius norm. Further, the signal to quantization noise ratio (SNR) is defined as:

$$\mathrm{SNR} = \frac{\|A\|_F}{D}$$

In accordance with embodiments, the transmitter employs a precoding matrix decomposition algorithm that expands **A** into a series of summands. The expansion is terminated as soon as the SNR falls below the predefined or maximum SNR requirements on the approximated matrix of the specific application. In accordance with embodiments, the decomposition may be terminated once an additional SNR achievable by a further matrix reaches of falls below a certain or predefined threshold.

*Example - Standard Binary Format*

In order to compare the disclosed matrix-multiplication algorithms to the standard method where each element in **A** is represented in a binary format with $B$ bits, we note that the latter is a special case of a sum decomposition with $K = B$ - 1, where for each summand matrix $M_k$ the following holds:

$$M_k = 2^{Q-k}\mathbb{B} \quad \text{for some } Q \in \mathbb{Z} \;\wedge\; \mathbb{B} \in \{0, \pm 1\}^{M \times N} . \qquad (11)$$

That is, the elements of each summand matrix may only be zero or one particular power two with positive or negative sign. Furthermore, only consecutive exponents are allowed. Note that one bit in the binary format is reserved for the sign of the matrix element. For example, when considering this representation of the standard binary format with $B = 4$ for a matrix $A = \begin{bmatrix} 0.5377 & -2.2588 \\ 1.8339 & 0.8622 \end{bmatrix}$, the following decomposition is obtained:

$$\begin{bmatrix} 0.5377 & -2.2588 \\ 1.8339 & 0.8622 \end{bmatrix} \approx \underbrace{\begin{bmatrix} 0 & -2 \\ 2 & 0 \end{bmatrix}}_{F_1} + \underbrace{\begin{bmatrix} 0 & 0 \\ 0 & 1 \end{bmatrix}}_{F_2} + \underbrace{\begin{bmatrix} \frac{1}{2} & -\frac{1}{2} \\ -\frac{1}{2} & 0 \end{bmatrix}}_{F_3}.$$

As an example, matrices with entries that are i.i.d. Gaussian random variables with zero mean and unit variance are considered. In this case, a SNR of 3dB is obtained for $k = 1$ and each additional matrix summand in average improves the SNR by 6dB. This is independent of the matrix dimensions.

*Example - General Sum Decomposition*

Now, we loosen the constraint (11) and apply the general sum decomposition as defined in (6) and (7). As for the previous example, $K$ is set to three and no constraint on the memory usage is imposed $(\mathbb{V}_k = \mathbb{Z})$. The decomposition is carried out by Algorithm 2 detailed below.

$$\begin{bmatrix} 0.5377 & -2.2588 \\ 1.8339 & 0.8622 \end{bmatrix} \approx \underbrace{\begin{bmatrix} \frac{1}{2} & -2 \\ 2 & 1 \end{bmatrix}}_{F_1} + \underbrace{\begin{bmatrix} \frac{1}{32} & -\frac{1}{4} \\ -\frac{1}{8} & -\frac{1}{8} \end{bmatrix}}_{F_2} + \underbrace{\begin{bmatrix} \frac{1}{128} & -\frac{1}{128} \\ \frac{1}{32} & -\frac{1}{64} \end{bmatrix}}_{F_3},$$

As may be seen, each matrix summand may contain arbitrary integer powers of two. For Gaussian matrices, a SNR of about 14.2dB is obtained for $K = 1$ and each additional matrix summand in average improves the SNR approximately by 14.5dB per matrix summand, irrespective of the matrix dimensions. Hence, for any $K$, a significantly larger SNR may be obtained by the general sum decomposition as compared to the special case of the standard binary format.

*Sum Decomposition Algorithm*

To generate the sum decompositions as described above, the following algorithms may be used. It is noted that the present invention is not limited to the subsequently described algorithms. In accordance with further amendments, other algorithms may be employed. Algorithm 1 finds for each element in a matrix the closest power of two under consideration of the set of feasible exponents $\mathbb{V}$. The actual decomposition into a series of summand matrices is performed by Algorithm 2, which recursively applies Algorithm 1 to the current residuum of the decomposition.

*Algorithm 1:* PowerOfTwoApprox ($A$, $\mathbb{V}$ )

Input and Initialization:

- $A$: $M \times N$ matrix to be approximated

- $\mathbb{V}$: Set of feasible integer exponents

- $\tilde{A}$: Initialized as empty $M \times N$ matrix

Output: $\tilde{A}$, which is an approximation of $A$ where all elements in $\tilde{A}$ are integer powers of two.

**For** $m = 1$ to $m = M$ **do**:

    **For** $n = 1$ to $n = N$ **do**:

        - Solve $\tilde{a}_{mn} = \underset{\alpha \in \{\pm 2^{\{E_0\} \cup \mathbb{V}}\}}{\mathrm{argmin}} \|a_{mn} - \alpha\|_2$

    **EndFor**

**EndFor**

*Algorithm 2:* SumDecomposition ($A$, $\mathbb{V}_k$, $K$)

Input and Initialization:

- $A$: $M \times N$ Matrix to be approximated, e.g. as calculated by a conventional precoding algorithm

- $M_1$: Initialized as `PowerOfTwoApprox`$(A, \mathbb{V}_k)$;

- $W$: Initialized as $M_1$

- $M_k$, $k \in \{1, 2, \dots, K\}$: Initialized as empty $M \times N$ matrices

Output: Matrix summands $M_k$, $k \in \{1, 2, \dots, K\}$

**For** $k = 2$ to $k = K$ **do**:

    - $M_k =$ `PowerOfTwoApprox`$(A - W, \mathbb{V}_k)$;

    - Set $W = W + M_k$

**EndFor**

*Product-Decomposition*

In accordance with other embodiments, the power-2-decomposition may be a product-decomposition. In accordance with such embodiments, the precoding matrix **A** may be approximated as follows:

$$\tilde{A} = \prod_{k=1}^{K} F_k \qquad\qquad (12)$$

In accordance with embodiments, the first matrix $F_1$ is a $M \times U$ matrix, and the last matrix $F_K$ is a $V \times N$ matrix. The intermediate matrices $F_2$ to $F_{k-1}$ may have any compatible dimensions. Also, the values of $U, V$ may be selected as they best fit, provided the product of all matrices is a matrix having the same dimension as the original precoding matrix, for example, a $M \times N$ matrix.

In accordance with embodiments, some or all of the intermediate matrices $F_2$ to $F_{k-1}$ may have the same dimension. In any case, the entries of the matrices $F_1$ to $F_K$ are either positive or negative integer powers of two or zero. The entries of $F_1$ to $F_K$ have the following form:

$$[F_k]_{ij} = \pm 2^l \quad \text{for } l \in \{E_0\} \cup \mathbb{V}_k : \mathbb{V}_k \subset \mathbb{Z} \qquad (13)$$

The cardinalities of the sets $\mathbb{V}_k$ are specified in accordance with the available memory and depend on the total number of elements of the matrix factors. In addition, the matrix factors may be chosen sparse, which further influences the total memory occupation depending on the exact method used to store the sparse matrices.

In the following, an embodiment is assumed in which $F_1$ is a $M \times U$ matrix, where $U$ is an integer value, $F_2$ to $F_{K-1}$ are $U \times U$ matrices, and $F_K$ is a $U \times N$ matrix. In this embodiment, all matrices are assumed to be dense.

The multiplication of each row of $F_k$ with its succeeding vector, i.e., $F_{k+1}, ... F_K x$ requires $N$ bit shifts and $N$-1 additions, and when considering $F_2$ to $F_K$ to be comprised of $N$ rows and $F_1$ to contain $M$ rows, the total cost $C_{prd}$ for calculating $\tilde{y}$ (see equation (8a)) is as follows:

$$C_{Prd} = \left((K-1)N + M\right)\left(C_{Shf}N + C_{Add}(N-1)\right)B \qquad (14)$$

An example for a product or a multiplicative decomposition is now given. A $K \times N$ precoding matrix $A$ is assumed that is to be decomposed into three factors. The entries of the precoding matrix are considered to be i.i.d. Gaussian with zero mean and unit variance. For the same exemplary realization of $A$ as in the previous examples, the product decomposition may look as follows:

$$\begin{bmatrix} 0.5377 & -2.2588 \\ 1.8339 & 0.8622 \end{bmatrix} \approx \underbrace{\begin{bmatrix} \frac{1}{2} & -2 \\ 2 & 1 \end{bmatrix}}_{F_1} \underbrace{\begin{bmatrix} 1 & -\frac{1}{8} \\ -\frac{1}{16} & 1 \end{bmatrix}}_{F_2} \underbrace{\begin{bmatrix} 1 & -\frac{1}{64} \\ -\frac{1}{32} & -\frac{1}{64} \end{bmatrix}}_{F_3},$$

In case of the product decomposition, the SNR strongly depends on the matrix dimensions as well as on $k$. The following tables give exemplary results obtained using the suboptimum Algorithm 3 for the product decomposition of square and rectangular matrices, respectively:

**Table 1: Average SNR in dB achieved by product decomposition in dependence of the matrix dimensions and the number R of factors for various square Gaussian matrices.**

| $M \times N$ | R | | | | | $\Delta\text{SNR}_{max}$ |
|---|---|---|---|---|---|---|
| | 1 | 2 | 3 | 4 | 5 | |
| $2 \times 2$ | 14.2 | 17.1 | 17.3 | 17.3 | 17.3 | 2.9 |
| $4 \times 4$ | 14.2 | 18.4 | 19.2 | 19.5 | 19.6 | 4.2 |
| $16 \times 16$ | 14.2 | 19.3 | 20.6 | 21.3 | 21.7 | 5.1 |
| $256 \times 256$ | 14.2 | 19.7 | 21.2 | 22.0 | 22.6 | 5.5 |

**Table 2: Average SNR in dB achieved by product decomposition in dependence of the matrix dimensions and the number R of factors for various rectangular Gaussian matrices.**

| $MxN$ | R | | | | | $\Delta\text{SNR}_{max}$ |
|---|---|---|---|---|---|---|
| | 1 | 2 | 3 | 4 | 5 | |
| $2 \times 4$ | 14.2 | 20.6 | 24.8 | 27.2 | 28.6 | 6.4 |
| $3 \times 8$ | 14.2 | 25.1 | 32.0 | 36.3 | 39.1 | 10.9 |
| $4 \times 16$ | 14.2 | 30.0 | 42.1 | 50.7 | 57.1 | 15.8 |
| $5 \times 32$ | 14.2 | 35.6 | 54.7 | 70.7 | 82.7 | 21.4 |
| $6 \times 64$ | 14.2 | 41.3 | 67.5 | 92.9 | 117 | 27.1 |

(continued)

| MxN | R | | | | | ΔSNR$_{max}$ |
|---|---|---|---|---|---|---|
| | 1 | 2 | 3 | 4 | 5 | |
| 7 × 128 | 14.2 | 47.0 | 79.4 | 112 | 144 | 32.8 |
| 8 × 256 | 14.2 | 52.6 | 90.8 | 129 | 167 | 38.4 |
| 9 × 512 | 14.2 | 58.1 | 102 | 146 | 190 | 43.9 |
| 10 × 1024 | 14.2 | 63.5 | 113 | 162 | 212 | 49.3 |

The achievable average SNR as well as the maximum SNR improvement ΔSNR$_{max}$ for an additional matrix factor are illustrated. The following may be observed in accordance with embodiments:

1. The improvements in SNR with each additional matrix factor are dependent on $k$. In general, they decrease with growing $k$.
2. The higher the number of elements in matrix **A**, the higher the SNR obtained by the product decomposition.
3. For rectangular matrices, which are common typical in precoding applications, the SNR improvements are significantly higher than for square matrices.
4. In particular, for large rectangular matrices, already two-factor product decomposition (i.e. one where $K = 2$) may achieve a sufficiently high SNR. The gains in SNR are significantly larger than for a comparable sum decomposition.

Note that the large performance gap of the product decomposition applied to rectangular vs. square matrices in terms of SNR does not mean that the product decomposition is inappropriate for square matrices. Instead, a square matrix may always be represented by a stack of rectangular matrices which may be decomposed with the large SNR gains as indicated in Table 2.

In accordance with further embodiments, the memory usage of the decomposition may be further improved and the complexity reduced by choosing some or more of the matrix factors $F_k$ to be sparse, and for a sparsification, in accordance with embodiments, the columns in the left or first factors $F_1, F_2, ...$ may form a set of base vectors for the factors ..., $F_{k-1}$, $F_K$ to the right. The bases need not to be accurate and may be sparsified by nulling the elements with the smallest magnitude to save complexity and memory, and a sparsification factor may be as follows:

$$\Sigma_k = \frac{NK}{\|F_k\|_0},$$

where $\|\cdot\|_0$ denotes the $\ell_0$ "norm", which is the number of non-zero elements. For example, if $\Sigma = 2$, the total number of non-zero elements in each $F_k$ is half the number of elements in **A**.

*Example - Product Decomposition Algorithm*

An embodiment for finding a product decomposition with a minimized distortion may be as follows. Again, the optimum decomposition is considered to be NP-hard, i.e., including an exhaustive search over a discrete set with exponentially many members. The algorithm may be a recursive and greedy approach as the one sketched in the following:

*Algorithm 3:* ProductDecomposition $(A, K, S, \mathbb{V}_1, \mathbb{V}_2, ..., \mathbb{V}_K)$

Input and Initialization:

- $A$: $M \times N$ Matrix to be approximated, e.g. as calculated by a conventional precoding algorithm

- $F_1$: Initialized as `PowerOfTwoApprox`$(A, \mathbb{V}_1)$;

- $W$: Initialized as $F_1$

- $F_k$, $k \in \{1, 2, \ldots, K\}$: Initialized as empty $N \times N$ matrices

For $k = 2$ to $k = K$ do:

    For $n = 1$ to $n = N$ do:

- Let $a_n$ and $f_n$ be the $n$-th columns of $A$ and $F_k$, respectively

- Solve $f_n = \underset{\Phi \in \{\pm 2^{\mathbb{Z}}\}^K : \|\Phi\|_{0=S}}{\mathrm{argmin}} \|a_n - W\Phi\|_2$

    EndFor

- Set $W = WF_k$

EndFor

The parameter $S$ sets the desired number on non-zero elements for each column in $F_k$, $\{2, 3, \ldots, K\}$. Note that a more general algorithm might set different degrees of sparsity for each $k$ and/or set the $S_1$ smallest entries in $F_1$ to zero, for some $S_1 \in \mathbb{N} : S_1 < N^\wedge 2$.

As an example, the factorization of a $M \times N$ matrix $A$ into the product of two factors is considered. Namely, the $M \times U$ matrix $F_1$ and the $U \times N$ matrix $F_2$ are to be found such that $A \approx F_1 F_2$ and the entries of $F_1$ and $F_2$ all powers of two. To this end, first $F_1$ is set to be the power 2 quantization of $A$. It means that each entry of $F_1$ is set to be the integer power of two which is closest to the corresponding entry of $A$.

$F_2$ may, initally, include entries set to a certain value, e.g., zero, and the non-zero entries of $F_2$ are then found iteratively as follows: For each column of $F_2$, the distortion between the corresponding column in $A$ and its approximation via the decomposition, i.e., the multiplication of $F_1$ and the given column of $F_2$, is found. Now, each entry of this column is set to the correlation between the distortion vector and the column in $F_1$ indexed by the index of the entry. Then the entry is found whose change from zero to the correlation value results in maximal reduction in the norm of the distortion vector. This entry is set to the integer power of two that is closest to the correlation value. This procedure is repeated with the new version of $F_2$ until $F_2$ is filled with the desired number of non-zero entries. In accordance with embodiments, the number of non-zero entries is defined by a desired sparsity level of $F_2$.

Any further matrix factor may be found by applying the same technique with the only difference, that matrix $F_1$ of the above example is replaced by the product of the matrix factors known up to this point.

Although the embodiments above have been described for a downlink data transmission in which the base station operates as a transmitter and the UE operates as a receiver, the inventive approach is not limited to such embodiments. In accordance with other embodiments, the inventive approach is equally applicable in an uplink, UL, transmission or in a sidelink, SL, transmission of the mobile multiple input multiple output communication system, e.g., the communication link carrying data traffic from the mobile UE to the gNB or from a transmitting UE to one or more receiving UEs. In such embodiments the UE operates as the transmitter and the base station or the other UE operates as the receiver.

The transmitter described herein may include one or more of a UE, or a mobile terminal, or a stationary terminal, or a cellular IoT-UE, or a vehicular UE, or an IoT or narrowband IoT, NB-IoT, device, or a ground based vehicle, or an aerial vehicle, or a drone, or road side unit, or a building, or a macro cell base station, or a small cell base station, or a central unit of a base station, or a distributed unit of a base station, or a moving base station, or a remote radio head, or any other item or device provided with network connectivity enabling the item/device to communicate using the wireless communication network, e.g., a sensor or actuator, or any transmission/reception point, TRP, enabling an item or a device to communicate using the wireless communication network, the item or device being provided with network connectivity to communicate using the wireless communication network.

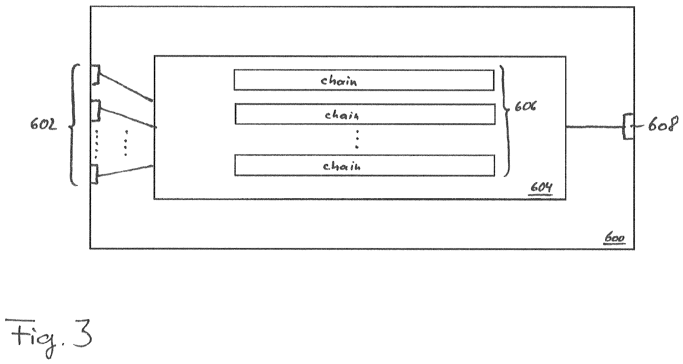

The present invention is not limited to the above described embodiments employing the inventive low-complexity and energy-efficient matrix-vector multiplication technique for precoding of data in a MIMO communication system to obtain transmit symbols. The inventive approach as described above with reference to the MIMO communication system may be equally applied to other signal processing scenarios employing a matrix-vector multiplication. In accordance with other embodiments, the inventive approach may be used in an artificial neural network. Fig. 3 is a block diagram schematically representing an artificial neural network 600 including a plurality of inputs 602 and a processor 604 coupled to the inputs 602 and having one or more processing chains 606. The processor may be coupled to an output 608. Some or all of the plurality of inputs 602 receive input values or input data so that a data vector may be presented to the processor 604. The processing chain(s) 606 process the input values for obtaining output values to be output at 608. The processor 604 multiplies the data vector including the input values by a matrix so as to obtain the output values. The matrix is approximated by a plurality of matrices whose elements are positive or negative integer powers of two so that multiplying the data vector by the matrix includes a series of sub-multiplications, each of the sub-multiplications being realized only by bit shifts and additions. The above described embodiments for approximating the matrix by a plurality of matrices whose elements are positive or negative integer powers equally apply for the artificial neural network embodiments.

An exemplary use case is a dense neural network with $L$ layers. The output of the $i$-th layer, $i \in \{1,2, \dots , L\}$, may be mathematically described by the equation

$$z_i = f_i(A_i\, z_{i-1}),$$

where $z_i$ is the vector of outputs of the layer, $A_i$ is a matrix of weights with appropriate dimensions, and $f_i(\cdot)$ is a nonlinearity such as the sigmoid function. The input to the neural network is $z_0$ and the output is obtained as $z_L$. Obviously, each layer involves a matrix-vector multiplication that may be optimized by the disclosed decompositions.

In accordance with embodiments, the product-decomposition may include a nonlinearity associated with the respective factors. In accordance with such embodiments, a matrix A may be approximated as follows:

$$\widetilde{A} = \prod_{k=1}^{K} f_k(F_k) \qquad\qquad (15)$$

where

$\widetilde{A}$      represents the approximated matrix,

$F_k$      represents a matrix of the decomposition with entries being either zero or a positive or negative integer power of 2, $k \in \{1,2,\dots, K\}$, and

$f_k(\cdot)$      represents a nonlinearity such as the sigmoid function to which $F_k$ is subjected.

The respective factors or matrices $F_k$ may be subjected to the same nonlinearity (e.g. $f_k(\cdot) = f(\cdot)$), or some or all of the factors or matrices $F_k$ may be subjected to the different nonlinearity (e.g., $f_k(\cdot) \neq f_{k\pm1}(\cdot)$). In accordance with embodiments, the nonlinearity may be a unity function turning equation (15) into equation (12).

Based on the approximation $\widetilde{A}$ of the precoding matrix $A$ as indicated in (15), the matrix-vector multiplication, e.g., when used in an artificial neural network as described above, may be approximated as follows:

$$\widetilde{y} = \widetilde{A}x$$
$$= f_1F_1\left(f_2F_2\left(f_3F_3\left(\dots f_{k-1}F_{k-1}\left(f_KF_K\right)(x)\right)\right)\right)$$

where

$F_k$      represents a matrix of the decomposition with entries being either zero or a positive or negative integer power of 2, $k \in \{1,2, \dots , K\}$, and

$f_k$      represents nonlinearities.

Yet other signal processing scenarios employing a matrix-vector multiplication in accordance with embodiments of the present invention may include signal detection applications and machine learning applications. Thus, in general, the inventive approach provides methods and apparatus for processing input data so as to obtain output data for further use by multiplying a data vector including the input data by a matrix, the matrix is approximated by a plurality of matrices whose elements are positive or negative integer powers of two so that multiplying the data vector by the matrix includes a series of sub-multiplications, each of the sub-multiplications being realized only by bit shifts and additions.

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

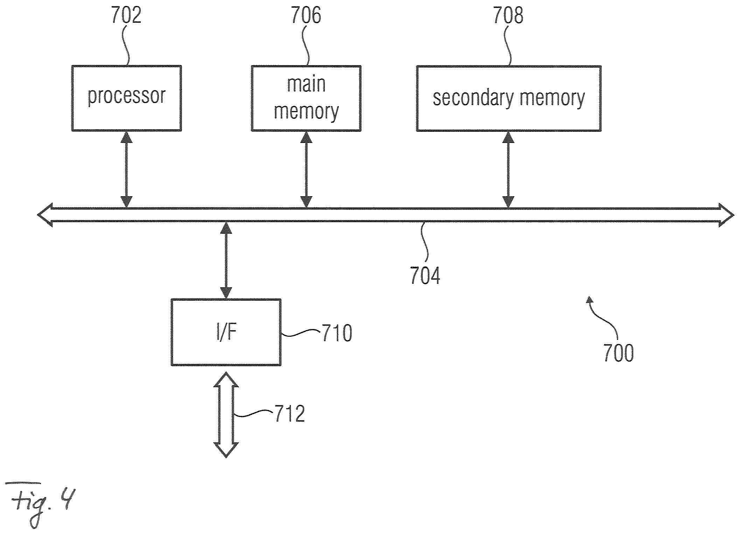

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 4 illustrates an example of a computer system 700. The units or modules as well as the steps of the methods performed by these units may execute on one or more computer systems 700. The computer system 700 includes one or more processors 702, like a special purpose or a general purpose digital signal processor. The processor 702 is connected to a communication infrastructure 704, like a bus or a network. The computer system 700 includes a main memory 706, e.g., a random access memory (RAM), and a secondary memory 708, e.g., a hard disk drive and/or a removable storage drive. The secondary memory 708 may allow computer programs or other instructions to be loaded into the computer system 700. The computer system 700 may further include a communications interface 710 to allow software and data to be transferred between computer system 700 and external devices. The communication may be in the form electronic, electromagnetic, optical, or other signals capable of being handled by a communications interface. The communication may use a wire or a cable, fiber optics, a phone line, a cellular phone link, an RF link and other communications channels 712.

The terms "computer program medium" and "computer readable medium" are used to generally refer to tangible storage media such as removable storage units or a hard disk installed in a hard disk drive. These computer program products are means for providing software to the computer system 700. The computer programs, also referred to as computer control logic, are stored in main memory 706 and/or secondary memory 708. Computer programs may also be received via the communications interface 710. The computer program, when executed, enables the computer system 700 to implement the present invention. In particular, the computer program, when executed, enable processor 702 to implement the processes of the present invention, such as any of the methods described herein. Accordingly, such a computer program may represent a controller of the computer system 700. Where the disclosure is implemented using software, the software may be stored in a computer program product and loaded into computer system 700 using a removable storage drive, an interface, like communications interface 710.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1. A method for providing transmit symbols to be transmitted by a transmitter to one or more receivers of a wireless MIMO communication system, the method comprising:

   receiving data to be transmitted to the one or more receivers, and
   obtaining the transmit symbols to be transmitted by multiplying a data vector including the data to be transmitted by a matrix, like a precoding matrix,
   wherein the matrix is approximated by a plurality of matrices whose elements are positive or negative integer powers of two so that multiplying the data vector by the matrix includes a series of sub-multiplications, each of the sub-multiplications being realized only by bit shifts and additions.

2. A method for operating an artificial neural network, the method comprising:

   receiving input values for some or all of the inputs of the artificial neural network; and
   processing the input values according to a processing chain defined by the artificial neural network or a part of the artificial neural network, thereby obtaining output values,
   wherein the processing comprises multiplying a data vector including the input values by a matrix so as to obtain the output values, and
   wherein the matrix is approximated by a plurality of matrices whose elements are positive or negative integer powers of two so that multiplying the data vector by the matrix includes a series of sub-multiplications, each of the sub-multiplications being realized only by bit shifts and additions.

3. The method of claim 1 or 2, wherein the matrix is approximated by
   determining the plurality of matrices at certain times or for certain intervals, e.g., when estimating a channel for transmitting the transmit symbols or for a coherence interval, or using matrices with which the transmitter or the artificial neural network is configured or preconfigured.

4. The method of any one of claims 1 to 3, wherein the plurality of matrices is obtained using a finite resolution decomposition of the matrix such that an amount of memory occupied by the plurality of matrices is substantially the same as an amount of memory occupied by the matrix.

5. The method of any one of claims 1 to 4, wherein the matrix is approximated by a product of the plurality of matrices whose elements are positive or negative integer powers of two, and the finite resolution decomposition includes a power-2-decomposition.

6. The method of any one of claims 1 to 5, wherein the power-2-decomposition is a product-decomposition, and the matrix is approximated as follows:

$$\widetilde{A} = \prod_{k=1}^{K} F_k$$

   where

   $\widetilde{A}$ represents the approximated matrix,
   $F_k$ represents a matrix of the decomposition with entries being either zero or a positive or negative integer power of 2, $k \in \{1,2, \dots , K\}$.

7. The method of claim 6, wherein the matrix is a *MxN* matrix, and the entries of $F_1, \dots F_K$ are of the form

$$[F_k]_{ij} = \pm 2^l \quad \text{for } l \in \{E_0\} \cup \mathbb{V}_k : \ \mathbb{V}_k \subset \mathbb{Z}.$$

8. The method of 6 or 7, wherein the product-decomposition includes a nonlinearity associated with the respective factors, and the matrix A may be approximated as follows:

$$\widetilde{A} = \prod_{k=1}^{K} f_k(F_k)$$

where

$\widetilde{A}$ represents the approximated matrix,
$F_k$ represents a matrix of the decomposition with entries being either zero or a positive or negative integer power of 2, $k \in \{1,2, \ldots , K\}$, and
$f_k(\cdot)$ represents a nonlinearity to which $F_k$ is subjected.

9. The method of any one of claims 1 to 5, wherein the power-2-decomposition is a sum-decomposition, and the precoding matrix is approximated as follows:

$$\widetilde{A} = \sum_{k=1}^{K} M_k$$

where

$\widetilde{A}$ represents the approximated *MxN* precoding matrix,
$M_k$ represents a matrix of the decomposition with entries being either zero or a positive or negative integer power of 2, $k \in \{1,2, \ldots , K\}$.

10. The method of claim 9, wherein the matrix is a *MxN* matrix, and the entries of $M_1, \ldots M_K$ are of the form

$$[M_k]_{ij} = \pm 2^l \quad \text{for } l \in \{E_0\} \cup \mathbb{V}_k : \mathbb{V}_k \subset \mathbb{Z}.$$

11. The method of any one of claims 6 to 10, wherein the cardinality of $C_{\mathbb{V}}$ is chosen so that the matrices of the decomposition occupy a predefined amount of bits, e.g., the same total amount of bits or a certain fraction of the total amount of bits, like ½ or ¼, as the matrix to be approximated.

12. The method of any one of claims 6 to 11, wherein
the decomposition is terminated as soon as a SNR falls below a predefined or maximum SNR requirement on the approximated matrix of the specific application, or
the number of matrices of the decomposition depends on an additional SNR achievable by a further matrix, wherein the decomposition may be terminated once an additional SNR achievable by a further matrix reaches of falls below a certain or predefined threshold.

13. The method of any one of the preceding claims, wherein the matrix is approximated such that a distortion between the approximated matrix and the matrix is at or below a predefined threshold.

14. A non-transitory computer program product comprising a computer readable medium storing instructions which, when executed on a computer, perform the method of any one of the preceding claims.

15. An apparatus for providing transmit symbols to be transmitted by a transmitter to one or more receivers of a wireless MIMO communication system, wherein
the apparatus is to receive data to be transmitted to the one or more receivers, and
the apparatus is to obtain the transmit symbols to be transmitted by multiplying a data vector including the data to be transmitted by a matrix, like a precoding matrix,
wherein the matrix is approximated by a product of a plurality of matrices whose elements are positive or negative integer powers of two so that multiplying the data vector by the matrix includes a series of sub-multiplications, each of the sub-multiplications being realized only by bit shifts and bit additions.

16. An artificial neural network, comprising:

a plurality of inputs, some or all of the inputs to receive input values; and

a processor coupled to the inputs, the processor including a processing chain, the processing chain to process the input values, thereby obtaining output values,

wherein the processor is to multiply a data vector including the input values by a matrix so as to obtain the output values, and

wherein the matrix is approximated by a plurality of matrices whose elements are positive or negative integer powers of two so that multiplying the data vector by the matrix includes a series of sub-multiplications, each of the sub-multiplications being realized only by bit shifts and additions.

17. A transmitter of a wireless MIMO communication system, comprising an apparatus of claim 15 for providing transmit symbols to be transmitted to one or more receivers of the wireless MIMO communication system.

18. A wireless MIMO communication system, comprising one or more receivers, and one or more transmitters of claim 17 for transmitting data to the one or more receivers.

Fig. 1

Fig. 2

Fig. 3

708 secondary memory

706 main memory

702 processor

704

700

710 I/F

712

Fig. 4

Europäisches
Patentamt

European
Patent Office

Office européen
des brevets

## EUROPEAN SEARCH REPORT

Application Number

EP 20 15 4407

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 9 306 641 B1 (YANG CHIA-HSIANG [TW] ET AL) 5 April 2016 (2016-04-05) | 1,14,15, 17,18 | INV. G06N3/04 |
| A | * abstract * * column 1 - column 13 * | 2-13,16 | H04B7/0413 |
| X | Yuhang Li ET AL: "ADDITIVE POWERS-OF-TWO QUANTIZATION: A NON- UNIFORM DISCRETIZATION FOR NEURAL NETWORKS", Open Review for ICLR 2020 Conference, 21 January 2020 (2020-01-21), XP055713879, Retrieved from the Internet: URL:https://openreview.net/references/atta chment?id=UfriSPPbF&name=original_pdf [retrieved on 2020-07-10] | 2-13,16 | |
| Y | * abstract * * page 1 - page 4 * * Algorithm 1; page 6 - page 8; figure 3; table 1 * | 1,14,15, 17,18 | |
| A | WO 2019/105484 A1 (HUAWEI TECH CO LTD [CN]) 6 June 2019 (2019-06-06) * the whole document * | 1-18 | TECHNICAL FIELDS SEARCHED (IPC) |
| A | ALI BEREYHI ET AL: "Robustness of Low-Complexity Massive MIMO Architectures Against Passive Eavesdropping", ARXIV.ORG, CORNELL UNIVERSITY LIBRARY, 201 OLIN LIBRARY CORNELL UNIVERSITY ITHACA, NY 14853, 5 December 2019 (2019-12-05), XP081545776, * the whole document * | 1-18 | G06N H04B |

-/--

The present search report has been drawn up for all claims

| Place of search | Date of completion of the search | Examiner |
|---|---|---|
| The Hague | 15 July 2020 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 20 15 4407

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XIAOWEI XU ET AL: "Efficient hardware implementation of cellular neural networks with powers-of-two based incremental quantization", 20170717; 1077952576 - 1077952576, 17 July 2017 (2017-07-17), pages 1-10, XP058407107, DOI: 10.1145/3183584.3183611 ISBN: 978-1-4503-6442-3 * the whole document * | 1-18 | |

-----

TECHNICAL FIELDS
SEARCHED      (IPC)

The present search report has been drawn up for all claims

| Place of search | Date of completion of the search | Examiner |
|---|---|---|
| The Hague | 15 July 2020 | Tsakonas, Athanasios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 20 15 4407

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2020

| Patent document cited in search report | | Publication date | Patent family member(s) | | Publication date |
|---|---|---|---|---|---|
| US 9306641 | B1 | 05-04-2016 | TW<br>US | 201626741 A<br>9306641 B1 | 16-07-2016<br>05-04-2016 |
| WO 2019105484 | A1 | 06-06-2019 | CN<br>WO | 109873665 A<br>2019105484 A1 | 11-06-2019<br>06-06-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **LEVANT AKSOY.** A Novel Method for the Approximation of Multiplierless Constant Matrix Vector Multiplication. *IEEE 13th International Conference on Embedded and Ubiquitous Computing,* 2015, 98-105
- **NICOLAS BOULLIS.** Some Optimizations of Hardware Multiplication by Constant Matrices. *IEEE Transactions on Computers,* October 2005, vol. 54 (10), 1271-1282
- **ROMAN GENOV.** Charge-Mode Parallel Architecture for Vector-Matrix Multiplication. *IEEE Transactions on Circuits and Systems-II: Analog and Digital Signal Processing,* October 2001, vol. 48 (10), 930-936
- Provable Bounds for Learning Some Deep Representations. **SANJEEV ARORA.** Proceedings of the 31st International Conference on Machine Learning. JMLR: W&CP, 2014, vol. 32
- **1SANJEEV ARORA.** *More algorithms for provable dictionary learning,* 03 January 2014
- **BEHNAM NEYSHABUR.** *Sparse Matrix Factorization,* 13 May 2014
- **HORNG, B-R. ; HENRY SAMUELI ; A. N. WILSON.** The design of two-channel lattice-structure perfect-reconstruction filter banks using powers-of-two coefficients. *IEEE Transactions on Circuits and Systems I: Fundamental Theory and Applications 40.7,* 1993, 497-499